# EUROPÄISCHE PATENTSCHRIFT

(11) **EP 2 284 053 B1**
(45) Veröffentlichungstag und Bekanntmachung des Hinweises auf die Patenterteilung: **29.10.2014**
(21) Anmeldenummer: 10167817.5
(22) Anmeldetag: 30.06.2010
(51) Int. Cl.: B60S 3/00, B08B 3/02, B05B 13/02, B65H 75/34, B23Q 1/00, B60S 3/04, F16L 3/01

(54) **Druckversorgungsanlage**
Pressure supply assembly
Installation d'alimentation sous pression

(30) Priorität: 11.08.2009 DE 102009036917
(43) Veröffentlichungstag der Anmeldung: 16.02.2011
(73) Patentinhaber: Rüfer, Matthias, 97857 Urspringen (DE)
(72) Erfinder: Rüfer, Matthias, 97857 Urspringen (DE)
(74) Vertreter: von den Steinen, Axel

(56) Entgegenhaltungen:
- WO-A2-98/08612
- GB-A- 1 333 387
- US-A- 2 787 500
- US-A1- 2002 162 576

## Beschreibung

Die Erfindung betrifft eine Druckversorgungsanlage für die flexible Bereitstellung eines Mediums, z.B. Wasser oder Druckluft, innerhalb eines Arbeitsraums, wobei das Anschlussstück als Druckabgabestelle über eine Führung verschiebbar gelagert ist.

Es ist trivial, dass die Versorgung bzw. Zuführung von z.B. Druckluft oder Wasser in Lackierkabinen, Werkstätten oder Waschanlagen über frei auf dem Boden verlegte Schläuche erfolgen kann. Ausgehend von der Betrachtung des Arbeitsaufwandes, welcher mit dem Auslegen und vor allem mit dem Wiederaufräumen der Schläuche verbunden ist, schlägt die DE 297 15 952 U1 vor, einen automatischen Schlauchaufroller einzusetzen, der den frei ausgelegten Schlauch nach dessen Gebrauch automatisch wieder aufrollt. Hierbei besitzt eine Schlauchtrommel einen Rückholmechanismus, welcher in der Regel durch eine Federkraft erzeugt wird, sowie eine Bremsvorrichtung, die das ungewollte Aufwickeln verhindert. Die Bremsvorrichtung kann manuell oder durch eine elektrische Steuerung ausgeschaltet werden, um so den Rückholvorgang zu ermöglichen.

Hierbei verbleiben zwei nahe liegende Probleme: Zum einen führen die frei liegenden Schläuche zu einer Behinderung der Fahrwege und somit zu einer Stolpergefahr; zum anderen unterliegen die Schläuche einem hohen Verschleiß.

Aus dem Stand der Technik sind zur Lösung dieser Aufgabe Schlauchführungssysteme aus Lackieranlagen bekannt, bei welchen über eine Rohr-Schlauch-Leitung eine Zuführung der Druckluft erfolgt. Für diese Zwecke wird ein flexibler Schlauch in großen Schlaufen an Laufkatzen befestigt. Diese wiederum sind in einer Führungsschiene frei beweglich, wobei die Führungsschienen vorteilhafter Weise waagrecht nahe der Decke verlaufen. Über Rohrleitungen wird eine Druckquelle bereitgestellt, an der der Schlauch angeschlossen ist. Von der Druckquelle kommend endet der Schlauch an der letzten Laufkatze hängend nahe dem Boden. Um die Zugänglichkeit um das gesamte Fahrzeug herum zu gewährleisten, ist es zwingend erforderlich, zwei identische, gegenüberliegende Druckversorgungsanlagen zu installieren.

Insbesondere nachteilig zeigt sich das Verhalten des Schlauchs sich fortwährend in Richtung der Druckquelle zurückzuziehen. Dieses Phänomen wird hervorgerufen durch die Gewichtskraft der frei hängenden Schlauchschlaufen, welche die Laufkatzen zusammenziehen. Des Weiteren eignet sich eine derartige Schlauchführung nicht für Werkstätten, da durch die verschiebbaren Schlauchschlaufen ein großer Bereich der Werkstattwand blockiert wird. In der Regel ist dieser Platz aber erforderlich, um Arbeitsgeräte und Arbeitsmaterial verschiedenster Art zu lagern und bereitzuhalten. In Lackierkabinen ist jeder Schlauch von Nachteil, insofern Partikel am Schlauch anhaften und sich wieder lösen können. Dies wird besonders durch die Schlauchschlaufen negativ begünstigt.

Ausgehend von dieser Problematik schlägt die DE 28 40 061 C2 vor, eine mehrarmige Deckenführung einzusetzen. Hierbei wird zentral über dem Arbeitsbereich eine Deckenhalterung angebracht, an dessen Ende sich ein erster um die Halterung frei rotierbarer Arm befindet. Weitergehend an diesem ersten Arm ist an dessen ersten Ende ein zweiter drehbarer Arm befestigt. Die Versorgungsleitung führt entlang der Arme oder innerhalb dieser. Am Ende des zweiten Arms wird die Versorgungsleitung als frei hängender Schlauch weitergeführt. Bei günstiger Wahl der Armlängen sowie der freien Beweglichkeit der Arme zueinander kann somit ein großer Arbeitsbereich abgedeckt werden. Als nachteilig wird erkannt, dass die freie Beweglichkeit eine Beschädigungsgefahr für ein zu lackierendes Fahrzeug darstellt, ohne jedoch das Problem abschließend zu lösen. Zur Verbesserung wird vorgeschlagen, die beiden Arme über ein Getriebe aneinander zu koppeln, um durch die entsprechende Wahl der Armlängen eine Ellipsenbewegung des zweiten Armendes und somit des frei hängenden Schlauchs zu erreichen.

Nachteilig bei dieser Art der Schlauchführung über an der Decke befestigte Arme ist jedoch, dass durch den Bewegungsraum der Arme eine große Deckenfläche freigehalten werden muss. So ist es z.B. nicht möglich, Lampen niedriger oder flexibel aufzuhängen, um eine optimale Ausleuchtung des zu lackierenden Fahrzeugs zu erreichen. Bei Lackierkabinen erfolgt eine Durchströmung mit gefilterter Luft von oben nach unten. Somit stört eine Anbringung einer Deckenzuführung mit frei beweglichen Armen den Luftstrom und erzeugt somit ungewünschte Wirbel und die Gefahr von Staubablagerungen. Weiterhin ist die leichte Zerstörung der Armausführung durch einen möglichen Missbrauch - durch zu starkes Ziehen am angeschlossenen Schlauch - nicht ausgeschlossen.

Für spezielle Reinigungsaufgaben, insbesondere für die Reinigung von Türrahmen, schlägt die Schrift DE 25 17 333 A1 vor, ein umlaufendes Schienensystem einzusetzen, bei dem in der Schiene ein Düsenkopf einer Hochdruck-Wasserstrahl-Reinigungsvorrichtung bewegt werden kann. Die Bewegung des Düsenkopfes erfolgt hierbei mit einem daran befestigten Kettenzug. Insofern ist es möglich, den Düsenkopf umlaufend in einem abgerundeten Rechteck zu bewegen, ohne dass es einer Handhabung des Düsenkopfes selber bedarf.
Weitere Druckversorgungsanlagen sind auch aus US 2787500, GB 1333387, US 2002 16 2576 oder aus WO 98/08 612 bekannt.

Ausgehend von dem bestehenden System ist es die Aufgabe, eine Druckluftversorgungsanlage bereitzustellen, die eine Versorgung über den gesamten Arbeitsraum bereitstellt, dabei einen minimalen Platz im Arbeitsraum verbraucht, keinen Aufräumaufwand erfordert, einfach in der Handhabung ist sowie die Gefahr von Beschädigungen am zu lackierenden Fahrzeug minimiert.

Diese Aufgabe wird erfindungsgemäß durch eine Druckversorgungsanlage nach der Lehre des Anspruch 1 gelöst.

Bevorzugte Ausführungsformen der Erfindung sind Gegenstand der Unteransprüche.

Grundlegende Merkmale gleichen denen aus bereits bekannten Druckversorgungsanlagen. So wird über eine Druckwelle das Medium, z.B. Druckluft, zugeführt. Die Art der Bereitstellung des Mediums an der Druckwelle soll hier nicht weiterbetrachtet werden. An der Druckquelle angeschlossen folgt im weiteren Verlauf ein flexibler Druckschlauch als Fluidleitung, dessen Ende die Druckabgabestelle bildet. Die Druckabgabestelle ist nicht zwingend als das Ende des Druckschlauchs mit einem Kupplungselement zu verstehen, sondern kann ebenso als ein Bauelement gebildet werden, an dem die Druckleitung fixiert ist und gleichzeitig durchgeführt wird. Das Bauelement, sei es mit einem Kupplungselement versehen oder nur zur Fixierung der Druckleitung, bildet das Anschlussstück der Druckversorgungsanlage. Ausgehend vom Anschlussstück ist als Regelfall ein weiterer Schlauch vorgesehen, an dessen Ende wiederum das notwendige Arbeitsgerät, z.B. eine Sprühpistole, angeschlossen ist. In der weiteren Beschreibung umfasst der Begriff Druckschlauch nicht den am Anschlussstück angeschlossenen weiteren Schlauch. Insofern bildet im Folgenden der Begriff Anschlussstück das Ende des Druckschlauchs und ist somit zugleich zuvor benannte Druckabgabestelle. Der Druckschlauch ist wenigstens abschnittsweise geführt, um ein gewisses Maß an Ordnung zu erreichen sowie die Funktionsfähigkeit der Druckversorgungsanlage sicherzustellen.

Ähnlich der im zweiten Beispiel aus dem Stand der Technik bekannten Schlauchführung wird das Anschlussstück in einer Führung geführt und kann entlang der Führung frei verschoben werden, wobei als ein erster maßgeblicher Unterschied die Verschiebung des Anschlussstücks über die gesamte Länge der Führung erfolgen kann.

Kennzeichnend für die erfinderische Gestaltung der Druckversorgungsanlage ist die Aufbringung von entgegengesetzten Zugkräften auf das Anschlussstück. Bereits in der bekannten Bauart aus dem Stand der Technik führen die Schlauchschlaufen zu einer Zugkraft auf die letzte Laufkatze, wobei diese jedoch direkt davon abhängig ist, wieweit die Schlaufen auseinander gezogen werden. Im Gegensatz hierzu bewirken die erfindungsgemäßen Zugorgane eine in erster Näherung konstante Zugkraft auf das Anschlussstück. Darüber hinaus wird hier erstmalig auch eine Zugkraft in entgegengesetzter Richtung auf das Anschlussstück aufgebracht.

Sinnvollerweise werden die Zugkräfte so gewählt, dass die auf das Anschlussstück in der Bewegungsrichtung der Führung resultierenden wirkenden Kräfte geringer sind, als die im System vorhandenen Reibkräfte. Somit wird die gewünschte Eigenschaft der Druckversorgungsanlage sichergestellt, dass das Anschlussstück in seiner jeweils letzten Stellung verbleibt.

Zur Vereinfachung der Bauart wird erfinderisch der Druckschlauch als erstes Zugorgan gewählt. Somit entfällt die Notwendigkeit ein zusätzliches Seil oder dergleichen parallel zur ohnehin vorhandenen Schlauchverlegung einzusetzen. Insbesondere ergeben sich hierdurch entscheidende Vorteile zum Stand der Technik. Es gibt keine Schlauchschlaufen innerhalb des Arbeitsraums, womit die Wände frei sind für andere Einrichtungen. Insbesondere für Lackierkabinen ergibt sich der Vorteil, dass nur die Länge des Schlauchs von der Schlauchzuführung in den Arbeitsraum bis zum Anschlussstück dem Lacknebel ausgesetzt ist. Ebenso stellt jeder Schlauch ein Problem dar, als dass Staubpartikel am Schlauch anhaften und sich durch die Bewegung wieder lösen können. Durch die deutlich reduzierte Schlauchlänge im Arbeitsraum reduziert sich schon hierdurch deutlich die Verunreinigungsgefahr. Gleiches gilt verständlicherweise auch für andere Anwendungen, wie z.B. Werkstätten.

Bei Druckversorgungsanlagen ist es prozessbedingt vorteilhaft, wenn nach Möglichkeit geschlossene Ringsysteme gebildet werden. Daher wird zur Bildung der erfindungsgemäßen Ausführung ein zweiter Druckschlauch an das Anschlussstück angeschlossen. Zur begrifflichen Trennung bezeichnet der erste Druckschlauch den, der in jedem Fall vorhanden ist, und der zweite Druckschlauch den, der optional zur Verbesserung eingesetzt werden kann. Der Begriff Druckschlauch steht für den ersten Druckschlauch oder bei Existenz des zweiten Druckschlauchs für beide Druckschläuche. Bei Anschluss des zweiten Druckschlauchs kann durch diesen gleichermaßen das Medium, in der Regel Druckluft, zum Anschlussstück gefördert werden. Die Druckquelle für das Medium für den zweiten Druckschlauch kann die gleiche Druckquelle wie die erste Druckquelle für den ersten Druckschlauch sein. In der beispielhaften Ausgestaltung der Erfindung ist die erste Druckquelle über ein Rohrleitungssystem mit der zweiten Druckquelle verbunden.

Die erfindungsgemäße Gestalt mit der Erzielung des entscheidenden Vorteils gegenüber dem Stand der Technik wird erreicht durch den Einsatz des zweiten Druckschlauchs auf der anderen Seite des Anschlussstücks als zweites Zugorgan. Hierdurch entfällt vollständig die Notwendigkeit, eine zusätzliche Seilkonstruktion für die Zugkräfte vorsehen zu müssen. Weiteres Merkmal ist, dass bei der Verwendung einer beidseitig des Anschlussstücks identischen Bauart die Zugkräfte leicht einzustellen sind und darüber hinaus durch die Verwendung von Gleichteilen die Kosten sowie die Ersatzteilversorgung verbessert werden.

Durch die variable Verschiebung des Anschlussstücks über die Länge der Führung entsteht beidseitig ein unterschiedlicher Schlauchüberschuss. Um eine geordnete Ablage zu erreichen und somit die Funktionssicherheit gewährleisten zu können, ist es zielführend, für jeden vorhandenen Druckschlauch einen Schlauchspeicher vorzusehen. Vorteilhafterweise ist dieser als Schlauchtrommel bzw. als Schlauchaufroller ausgeführt. Somit kann auf bewehrte Lösungen und einfach verfügbare Komponenten für die Druckversorgungsanlage zurückgegriffen werden. Es ist aber ebenso denkbar einen Schlaufenspeicher vorzusehen, wie dieser z.B. in den Dokumenten DE 102 34 627, DE 202 09 490 oder DE 35 12 653 beschrieben ist.

Um das automatische Aufrollen des Druckschlauchs zu gewährleisten, ist eine Rückstellkraft erforderlich. Hierzu wird in der erfindungsgemäßen Ausführung beim eingesetzten Schlauchaufroller eine Feder eingesetzt. Dies führt nicht nur zu einer Aufrollbewegung der Schlauchtrommel sondern erzeugt vielmehr auch eine Zugkraft auf den vom Schlauchspeicher weiterführenden Schlauch. Somit können über die Wahl der Bauart des Schlauchaufrollers und der zugehörigen Federkraft die auf das Anschlussstück wirkenden und über den Druckschlauch als Zugorgan übertragenden Zugkräfte eingestellt werden.

Handelsübliche Schlauchaufroller besitzen - soweit bekannt - ausnahmslos eine eingebaute Bremsfunktion. Hierbei gibt es verschiedene Ausführungen, wobei für die beispielhafte Ausführung ein Schlauchaufroller gewählt wurde, bei dem über eine Arretierung die Bremsfunktion außer Kraft gesetzt werden kann. Sofern eine höhere Stückzahl erreicht wird, ist es aber selbstverständlich möglich, einen Schlauchaufroller herzustellen, der keine Schlauchbremse eingebaut hat, aber ansonsten der üblichen Bauform von Schlauchaufrollern entspricht.

Bereits bei einer geraden Schlauchführung werden deutliche Vorteile gegenüber den bekannten Systemen erreicht. Besonders ist jedoch bei der erfindungsgemäßen Ausführung, dass die Schlauchführung in weitgehend beliebigen Bahnformen erfolgen kann. Hiermit ist insbesondere gemeint, dass bei einem gegebenen Arbeitsraum, z.B. einer Lackierkabine, die Schlauchführung in U-Form umlaufend um den nahezu gesamten Arbeitsraum erfolgen kann. Insbesondere entfällt somit die Notwendigkeit, wie beim ähnlichen Stand der Technik, einer doppelten Einrichtung einer Druckversorungsanlage auf beiden Seiten des Arbeitsraumes. Des Weiteren entfällt somit auch die zweite frei hängende weitere Fluidleitung, wodurch ebenso die Verunreinigungsgefahr durch an eben jener Fluidleitung anhaftenden und sich wieder lösenden Partikeln reduziert wird.

Die Vorteile eines beliebigen Führungsverlaufs werden durch die Führung des Druckschlauchs auf der gesamten Länge deutlich. Hierdurch wird sichergestellt, dass der Druckschlauch immer der Schlauchführung folgt und nicht, wie aus dem Stand der Technik bekannt, der Schlauch bei einem Bogen bzw. bei einer Ecke die Strecke zwischen zwei Laufkatzen in hinderlicher Weise abkürzt. Weiterhin wird hiermit ein Durchhängen des Schlauchs auf einem längeren freien Stück und somit eine Schwankung in der Zugkraft auf das Anschlussstück verhindert.

Die erfindungsgemäße Schlauchführung setzt sich aus zwei Bereichen zusammen, wobei ein kurzer Teil an beiden Enden eine weitere Schlauchführung bildet, in der der Druckschlauch in geschützter Lage geführt wird. Der wesentliche Teil der Schlauchführung verläuft in Bahnen und ermöglicht über dessen gesamte Länge die Verschiebung des Anschlussstückes. Insofern ist es für den Fachmann offensichtlich, was jeweils unter dem Begriff Schlauchführung zu verstehen ist, als dies sein kann: erstens eine Schlauchführung im allgemeinen unabhängig von der Ausführung; zweitens die gesamte Schlauchführung aus dem ersten oder beiden weiteren Schlauchführungen im Bereich des Eintritts in den Arbeitsraum zusammen mit der erfindungsrelevanten in Bahnen verlaufenden Schlauchführung; drittes die erfindungsrelevante in Bahnen verlaufende Schlauchführung.

Die Führung des Schlauchs als auch des Anschlussstücks erfolgt in einfacher Weise durch die Verwendung von Profilschienen. Zu diesem Zweck besitzt das Profil den Querschnitt eines an einer Stelle geöffneten Kastens. Durch die offene Stelle ragt das Anschlussstück und verbindet den Teil des Anschlussstückes, welcher innerhalb des Profils liegt, und den Teil, welcher außerhalb des Profils liegt. Gleichzeitig wird hierdurch die Weiterführung der Druckleitung realisiert. Durch diese Bauart wird es ermöglicht, das Anschlussstück bei angeschlossener weiterer Fluidleitung über den gesamten Führungsweg zu verschieben. Der Druckschlauch kommt im Inneren des Querschnitts zum Liegen. Somit wird als ein weiterer Vorteil der erfindungsgemäßen Konstruktion erreicht, dass der Druckschlauch weitgehend von den Umgebungseinflüssen innerhalb des Arbeitsraums, z.B. dem Lacknebel, geschützt ist.

Um eine jederzeit leichte und einfache Verschiebbarkeit des Anschlussstücks entlang der Schlauchführung zu gewährleisten, ist es besonders vorteilhaft, wenn das Anschlussstück spielfrei entlang der Profilschiene geführt wird. Dieses wird erreicht indem am Anschlussstück passend zur Geometrie der Profilschiene Führungsrollen angebracht werden. Gleichermaßen ist es aber auch möglich, Gleitelemente einzusetzen. Um der in der Regel schräg auftreffenden Zugkraft auf das Anschlussstück von der abgehenden Druckleitung einen ausreichenden Widerstand entgegenzusetzen, sind die Führungsrollen am Anschlussstück außerhalb der Profilschiene angebracht und erzeugen eine umgreifende Abschützung. Insbesondere durch diese Ausführung wird ein Verkanten effektiv verhindert.

In weiterer Ausführung kann ergänzend die Anlage zur Erhöhung des Benutzungskomforts um einen Antrieb erweitert werden. Zu diesem Zwecke wird vorteilhafter Weise ein Druckluftmotor am Anschlussstück angebracht. Über eine Betätigungseinrichtung, z.B. Druckluftschalter, wird der Druckluftmotor gesteuert und kann so in zwei Bewegungsrichtungen versetzt werden. Der Druckluftmotor wiederum greift über ein Zahnrad in eine Zahnkette ein, die zu diesem Zwecke an der Führungsschiene angebracht ist. Gleichermaßen ist es aber auch möglich, über eine Gummiwalze eine Übertragung der Bewegung vom Druckluftmotor direkt auf die Führungsschienen zu ermöglichen. Vergleichbare Ausführungen, wie z.B. mit elektrisch angetriebenem Motor, sind ebenso möglich.

Die offenbarte Druckversorgungsanlage eignet sich insbesondere für die Leitung von Druckluft, wobei sich hierbei eine bevorzugte Anwendung in Lackieranlagen ergibt.

Ebenso kann eine derartige Druckversorgungsanlage für die Leitung von Wasser eingesetzt werden, wobei in diesem Fall der Einsatz in Waschanlagen für die Reinigung von Fahrzeugen besonders vorteilhaft ist.

In den beigefügten Zeichnungen ist eine vorteilhafte Ausführung dargestellt und wird im Folgenden näher beschrieben.

Es zeigen:
- **Fig. 1**: eine schematische Ansicht einer Lackieranlage mit erfindungsgemäßer Druckversorgungsanlage;
- **Fig. 2**: die Druckversorgungsanlage mit Schienensystem und Anschlussstück;
- **Fig. 3**: die Druckversorgungsanlage mit Schienensystem, Anschlussstück sowie der Herausleitung der Drucklei- tung aus dem Arbeitsraum;
- **Fig. 4**: eine detaillierte Ansicht des Anschlussstückes, wel- ches sich in einem Bogenbereich der Profilschiene be- findet;
- **Fig. 5**: eine Ansicht der Schlauchtrommel, welche sich oberhalb der Lackieranlage befindet;
- **Fig. 6**: eine detaillierte Ansicht des Anschlussstückes;
- **Fig. 7**: ein Schnitt durch das Anschlussstück im Bereich der Führungsrollen.

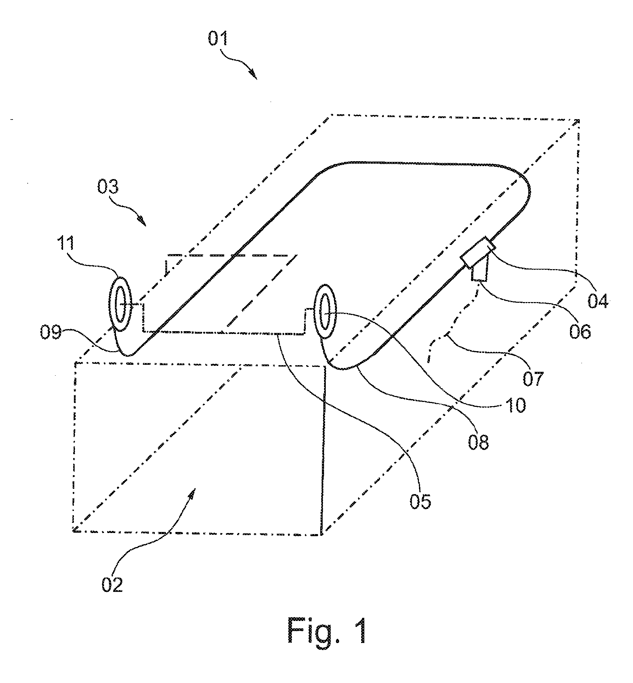

Die **Fig. 1** soll skizzenhaft eine Lackierkabine 01 darstellen. Diese weist zunächst einmal den Arbeitsraum 02 auf, in den das zu lackierende Fahrzeug gestellt werden kann. Im Deckenbereich befindet sich die erfindungsgemäße Druckversorgungsanlage 03. Außerhalb des Arbeitsraumes 02, oberhalb der Lackierkabine 01, verlaufen die Versorgungsleitungen, welche die entsprechende Druckquelle 05 bilden. Diese führen zu zwei Schlauchtrommeln 10, 11, welche sich beidseitig oberhalb der Lackierkabine 01 befinden. Von diesen Schlauchtrommeln 10, 11 verlaufen nun die beiden flexiblen Druckschläuche 08, 09 bis zum Anschlussstück 04. Im horizontalen Verlauf der Druckschläuche 08, 09 befindet sich die erfinderische Schlauchführung 12, über deren Verlauf das Anschlussstück 04 frei verschoben werden kann. Vom Anschlussstück 04 abgehend folgt eine weitere Fluidleitung 07.

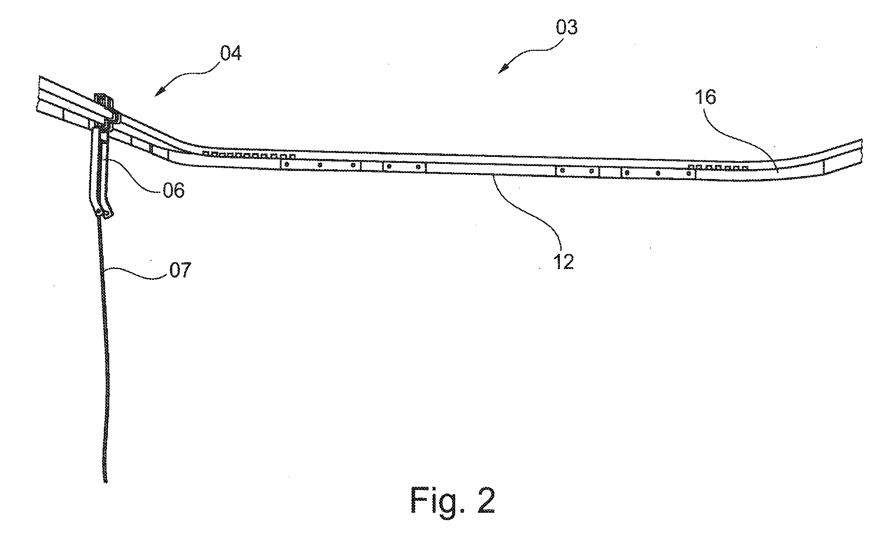

Die **Fig. 2** zeigt die Druckversorgungsanlage 03 im Bereich der Schlauchführung 12. Diese weist in den beiden Ecken des Arbeitsraumes 02 bogenförmige Abschnitte 16 auf. Ebenso dargestellt ist das Anschlussstück 04, auf dessen Unterseite sich die Druckabgabestelle 06 befindet. Dort angeschlossen ist die weitere Fluidleitung 07. Das Anschlussstück 04 kann ohne Hindernis frei über die bogenförmigen Abschnitte 16 geführt werden.

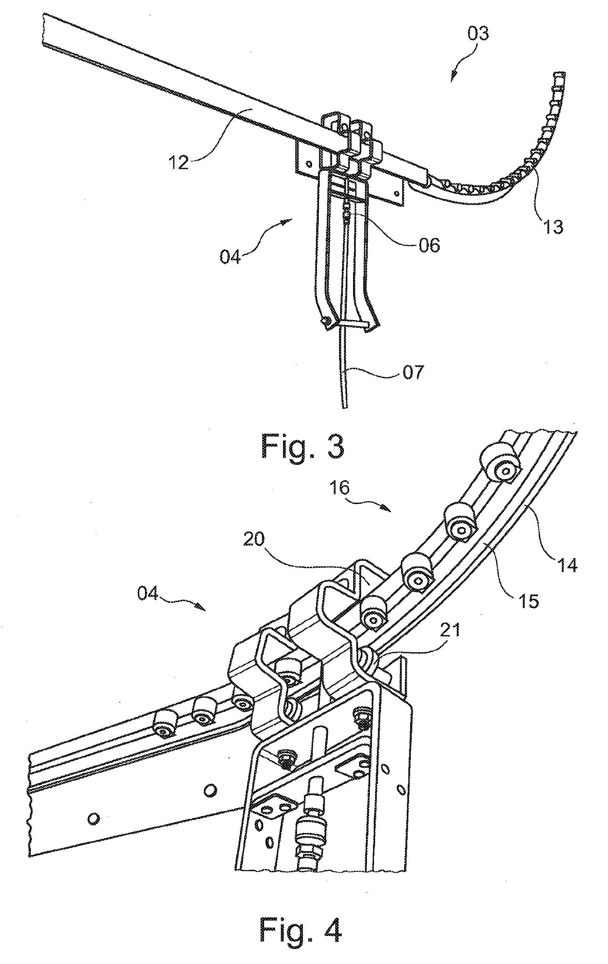

Die **Fig. 3** zeigt die Schlauchführung (12, 13) im Bereich des Eintritts der Druckleitung 08, 09 in den Arbeitsraum 02. Wie zu erkennen ist, besteht das Anfangsstück dieser Schlauchführung aus einem bogenförmigen Rohr 13. Daran anschließend folgt die erfinderische Schlauchführung 12 bestehend aus Profilschienen 14. Wiederum dargestellt ist ebenso das Anschlussstück 04 mit der Druckabgabestelle 06 sowie der weiteren Fluidleitung 07.

In **Fig. 4** dargestellt ist der bogenförmige Abschnitt 16 der Profilschiene 14. Hierbei ist gut die Öffnung 15 auf der Unterseite der Profilschiene 14 zu erkennen. Ebenso sind in dieser Abbildung die Führungsrollen 20, 21 am Anschlussstück 04 zu erkennen.

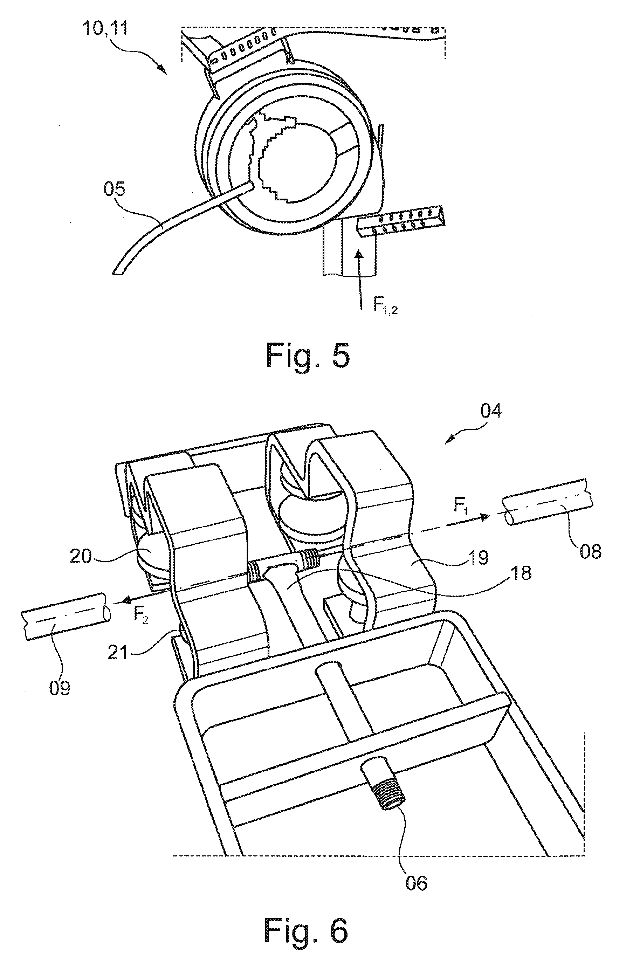

Die Fortführung der Druckleitung, wie diese in **Fig. 3** dargestellt ist, folgt auf der Oberseite des Arbeitsraumes in die Schlauchtrommel 10, 11 - siehe **Fig. 5**. An dieser ist die Druckquelle 05 angeschlossen. Die Schlauchtrommel erzeugt die für die erfindungsgemäße Gestalt notwendige Zugkraft F₁ bzw. F₂, wobei die beiden Kräfte näherungsweise gleich groß sind, d.h. die Differenz geringer ist, als die systembedingten Reibkräfte in der Schlauchführung 12, 13.

Die **Fig. 6** zeigt eine detaillierte Ansicht des Anschlussstückes 04. Hierbei ist der Aufbau des Anschlussstückes 04 mit den oberen Führungsrollen 20 sowie den unteren Führungsrollen 21 gut zu erkennen. Diese kommen außerhalb der Profilschiene 14 zum Liegen, während hingegen der erste Druckschlauch 08 sowie der zweite Druckschlauch 09 innerhalb der Profilschiene 14 liegen und am T-förmigen Rohrstück 18 angeschlossen sind. Auf das Anschlussstück 04 wirken durch die Druckschläuche 08, 09 Zugkräfte F₁ sowie F₂ auf das T-förmige Rohrstück 18, wodurch im Ergebnis das Anschlussstück 04 an der Profilschiene 14 stets in Ruhe verbleibt.

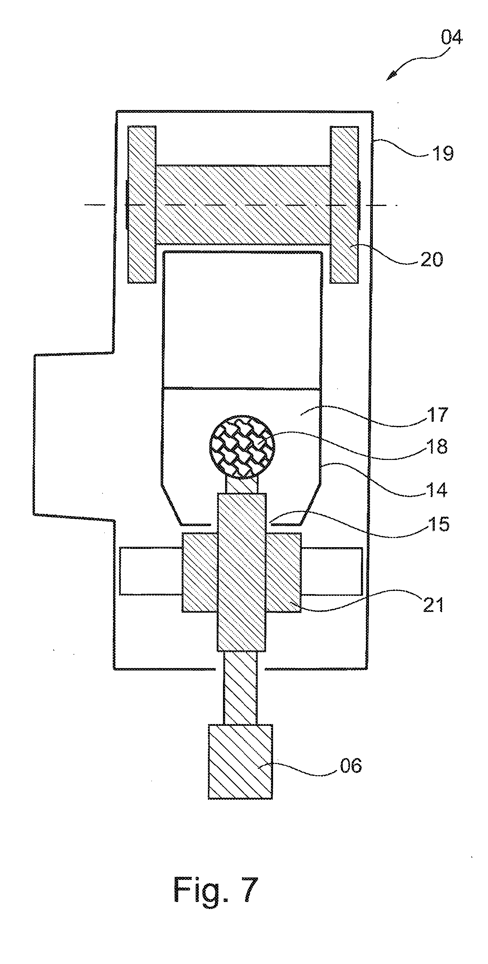

Die **Fig. 7** zeigt nochmals das Anschlussstück 04 mit der Profilschiene 14 im Schnitt durch die Führungsrollen. Auf der Oberseite der Profilschiene 14 ist die obere Führungsrolle 20 angeordnet und entsprechend auf der Unterseite der Profilschiene die untere Führungsrolle 21. Diese sorgen in Kombination für die spielfreie Lagerung des Anschlussstückes 04 auf der Profilschiene 14. Des Weiteren dargestellt ist das T-förmige Rohrstück 18, dessen unterer Rohrabschnitt in der Druckabgabestelle 06 mündet. Ein umgreifender Rahmen 19 bildet die tragende Struktur des Anschlussstückes 04. Im Innenquerschnitt 17 der Profilschiene 14 liegt im Wesentlichen der erste sowie der zweite Druckschlauch 08 und 09.

## Patentansprüche

1. Druckversorgungsanlage (03) mit zumindest einer Druckquelle (05), aus der ein unter Druck stehendes Medium nachgefördert werden kann, und mit zumindest einer Druckabgabestelle (06), an der das unter Druck stehende Medium abgegeben werden kann, wobei zwischen Druckquelle (05) und Druckabgabestelle (06) als Fluidleitung zumindest ein erster flexibler Druckschlauch (08) vorgesehen ist, durch den das unter Druck stehende Medium hindurchgefördert werden kann, wobei der Druckschlauch (08) mittels einer Schlauchführung (12, 13) zumindest abschnittsweise geführt ist, und wobei an dem zur Druckabgabestelle (06) weisenden Ende des Druckschlauches (08) ein bewegliches Anschlussstück (04) vorgesehen ist, und wobei das Anschlussstück (04) zur Weiterführung der Fluidleitung (07) geeignet ist, wobei das Anschlussstück (04) mittels der Schlauchführung (12) entlang eines Stellwegs verschiebbar gelagert ist, wobei an beiden Enden des Anschlussstücks (04) jeweils ein Zugorgan zum Eingriff kommt, und wobei beide Zugorgane entgegengesetzte Zugkräfte (Fⱼ, F₂) in beide Richtungen des Stellwegs auf das Anschlussstück (04) übertragen,
**dadurch gekennzeichnet,**
**dass** ein zweiter Druckschlauch (09) vorhanden ist, der mit einem Ende an dem beweglichen Anschlussstück (04) angeschlossen ist, wobei das Medium auch durch den zweiten Druckschlauch (09) zum Anschlussstück (04) gefördert werden kann, und wobei die Zugorgane von den Druckschläuchen (08, 09) gebildet werden.

2. Druckversorgungsanlage (03) nach Anspruch 1,
**dadurch gekennzeichnet,**
**dass** durch die Auswahl bzw. Einstellung der auf die Zugorgane aufgebrachten und auf das Anschlussstück (04) wirkenden Kräfte in Summe mit aus den angeschlossenen ersten oder beiden Druckschläuchen (08, 09) resultierenden Zugkräften (F₁, F₂) diese in Richtung der Schlauchführung (12) geringer sind, als die in der gesamten Schlauchführung (12, 13) wirkenden Reibkräfte.

3. Druckversorgungsanlage (03) nach Anspruch 1 oder 2,
**dadurch gekennzeichnet,**
**dass** der erste und/oder zweite Druckschlauch (08, 09) zumindest teilweise in einem Schlauchspeicher (10, 11) aufgenommen werden kann.

4. Druckversorgungsanlage (03) nach Anspruch 3,
**dadurch gekennzeichnet,**
**dass** es sich bei dem Schlauchspeicher um eine Schlauchtrommel bzw. einen Schlauchaufroller (10, 11) handelt.

5. Druckversorgungsanlage (03) nach einem der vorhergehenden Ansprüche 1 bis 4,
**dadurch gekennzeichnet,**
**dass** der Schlauchspeicher (10, 11) die Zugkraft (F₁, F₂) erzeugt, welche über den Druckschlauch (08, 09) als Zugorgan auf das Anschlussstück (04) übertragen wird, wobei die Zugkraft (F₁, F₂), welche auf das Zugorgan übertragen wird, durch eine Federkraft erzeugt wird.

6. Druckversorgungsanlage (03) nach einem der vorhergehenden Ansprüche 1 bis 5,
**dadurch gekennzeichnet,**
**dass** die Schlauchführung (12) einen vorwiegend horizontalen Verlauf aufweist, wobei die Schlauchführung (12) zur Richtungsänderung bogenförmige Abschnitte (16) aufweist.

7. Druckversorgungsanlage (03) nach einem der vorhergehenden Ansprüche 1 bis 6,
**dadurch gekennzeichnet,**
**dass** der am Anschlussstück (04) angeschlossene Druckschlauch (08, 09) auf der im wesentlichen gesamten Länge mittels der Schlauchführung (12, 13) geführt ist.

8. Druckversorgungsanlage (03) nach einem der vorhergehenden Ansprüche 1 bis 7,
**dadurch gekennzeichnet,**
**dass** die Schlauchführung (12) aus Profilschienen (14) zusammengesetzt ist.

9. Druckversorgungsanlage (03) nach Anspruch 8,
**dadurch gekennzeichnet,**
**dass** die am Anschlussstück (04) angeschlossenen Druckschläuche (08, 09) nach der weiteren Schlauchführung (13) auf der im wesentlichen gesamten Länge innerhalb des durch die Profilschienen (14) zur Verfügung gestellten Innenquerschnittes (17) geführt sind.

10. Druckversorgungsanlage (03) nach einem der vorhergehenden Ansprüche 1 bis 9,
**dadurch gekennzeichnet,**
**dass** das Anschlussstück (04) im wesentlichen spielfrei an und/oder in der Profilschiene (14) geführt ist.

11. Druckversorgungsanlage (03) nach einem der vorhergehenden Ansprüche 1 bis 10,
**dadurch gekennzeichnet,**
**dass** am Anschlussstück (04) ein Antriebsmotor angebracht ist, wobei der Antriebsmotor das Anschlussstück in beide Richtungen verschieben kann.

12. Druckversorgungsanlage (03) nach einem der vorhergehenden Ansprüche 1 bis 11,
**dadurch gekennzeichnet,**
**dass** der Druckschlauch (08, 09) für die Förderung von Druckluft vorgesehen ist.

13. Druckversorgungsanlage (03) nach einem der vorhergehenden Ansprüche 1 bis 11,
**dadurch gekennzeichnet,**
**dass** der Druckschlauch (08, 09) für die Förderung von Wasser vorgesehen ist.

14. Lackieranlage (01) zur Lackierung von Fahrzeugen und Fahrzeugteilen, ausgestattet mit einer Druckversorgungsanlage (03) nach Anspruch 12.

15. Waschanlage (01) zur Reinigung von Fahrzeugen, ausgestattet mit einer Druckversorgungsanlage (03) nach Anspruch 13.

## Claims

1. A pressure supply assembly (03) having at least one pressure source (05), from which a pressurised medium can steadily be transported, and having at least one pressure discharge point (06), at which the pressurised medium can be discharged, wherein, as a fluid line, at least one first flexible pressure hose (08) is provided between the pressure source (05) and the pressure discharge point (06), through which pressure hose the pressurised medium can be transported, wherein the pressure hose (08) is guided by means of a hose guide (12, 13) at least in sections, and wherein a movable connection piece (04) is provided at the end of the pressure hose (08) that is oriented towards the pressure discharge point (06), and wherein the connection piece (04) is suitable for continued guiding of the fluid line (07), wherein the connection piece (04), by means of the hose guide (12), is mounted so as to be slidable along a travelling distance, wherein one traction element engages with each of the two ends of the connection piece (04), and wherein both traction elements transmit opposite traction forces (F₁, F₂) in the two directions of the travelling distance onto the connection piece (04),
**characterised in that**
a second pressure hose (09) is present, which is connected to the movable connection piece (04) with one end, wherein the medium can also be transported to the connection piece (04) through the second pressure hose (09), and wherein the traction elements are formed by the pressure hoses (08, 09).

2. The pressure supply assembly (03) according to claim 1,
**characterised in that**
by selecting or adjusting the forces that are applied onto the traction elements and that act on the connection piece (04), in total with the traction forces (F₁, F₂) that result from the first connected pressure hose (08) or from both connected pressure hoses (08, 09), said forces are smaller in the direction of the hose guide (12) than the friction forces that act in the entire hose guide (12, 13).

3. The pressure supply assembly (03) according to claim 1 or 2,
**characterised in that**
the first and/or the second pressure hose (08, 09) can at least partially be received in a hose storage (10, 11).

4. The pressure supply assembly (03) according to claim 3,
**characterised in that**
the hose storage is a hose drum or a hose recoiler (10, 11).

5. The pressure supply assembly (03) according to any one of the preceding claims 1 to 4,
**characterised in that**
the hose storage (10, 11) generates the traction force (F₁, F₂) which is transmitted onto the connection piece (04) via the pressure hose (08, 09) that acts as the traction element, wherein the traction force (F₁, F₂) which is transmitted onto the traction element is generated by a spring force.

6. The pressure supply assembly (03) according to any one of the preceding claims 1 to 5,
**characterised in that**
the hose guide (12) runs mainly horizontally, wherein the hose guide (12) has arc-shaped sections (16) for a change of direction.

7. The pressure supply assembly (03) according to any one of the preceding claims 1 to 6,
**characterised in that**
the pressure hose (08, 09) that is connected to the connection piece (04) is guided by means of the hose guide (12, 13) essentially over its entire length.

8. The pressure supply assembly (03) according to any one of the preceding claims 1 to 7,
**characterised in that**
the hose guide (12) is constructed from profile rails (14).

9. The pressure supply assembly (03) according to claim 8,
**characterised in that**
the pressure hoses (08, 09) that are connected to the connection piece (04), after the further hose guide (13), are guided within the internal cross-section (17) that is provided by the profile rails (14) essentially over their entire lengths.

10. The pressure supply assembly (03) according to any one of the preceding claims 1 to 9,
**characterised in that**
the connection piece (04) is guided at and/or in the profile rail (14) essentially without play.

11. The pressure supply assembly (03) according to any one of the preceding claims 1 to 10,
**characterised in that**
a drive motor is attached to the connection piece (04), wherein the drive motor is able to slide the connection piece in both directions.

12. The pressure supply assembly (03) according to any one of the preceding claims 1 to 11,
**characterised in that**
the pressure hose (08, 09) is envisaged for transporting compressed air.

13. The pressure supply assembly (03) according to any one of the preceding claims 1 to 11,
**characterised in that**
the pressure hose (08, 09) is envisaged for transporting water.

14. A painting assembly (01) for painting vehicles and vehicle parts, equipped with a pressure supply assembly (03) according to claim 12.

15. A washing assembly (01) for cleaning vehicles, equipped with a pressure supply assembly (03) according to claim 13.

## Revendications

1. Installation (03) d'alimentation sous pression ayant au moins une source (05) de pression à partir de laquelle un milieu sous pression peut être transporté de façon continue, et ayant au moins un point (06) de décharge de pression auquel le milieu sous pression peut être déchargé, dans lequel au moins un premier tuyau (08) flexible et sous pression agissant comme conduite de fluide est prévu entre la source (05) de pression et le point (06) de décharge de pression, le milieu sous pression pouvant être transporté par ce tuyau sous pression, dans lequel le tuyau (08) sous pression est guidé moyennant un guidage (12, 13) de tuyau au moins par sections, et dans lequel une pièce (04) de raccordement mobile est prévue à l'extrémité du tuyau (08) sous pression, ladite extrémité étant orientée vers le point (06) de décharge de pression, et dans lequel la pièce (04) de raccordement est apte à continuer le guidage de la conduite (07) de fluide, dans lequel la pièce (04) de raccordement, moyennant le guidage (12) de tuyau, est montée de façon à être déplaçable le long d'un parcours de réglage, dans lequel un organe de traction pénètre chacune des deux extrémités de la pièce (04) de raccordement, et dans lequel les deux organes de traction transmettent des forces (F₁, F₂) de traction opposées dans les deux sens du parcours de réglage à la pièce (04) de raccordement,
**caractérisée en ce qu'**
un deuxième tuyau (09) sous pression existe qui est raccordé à la pièce (04) de raccordement mobile avec une extrémité, le milieu pouvant être également transporté par le deuxième tuyau (09) sous pression à la pièce (04) de raccordement, et les organes de traction étant formés par les tuyaux (08, 09) sous pression.

2. Installation (03) d'alimentation sous pression selon la revendication 1,
**caractérisée en ce qu'**
en sélectionnant ou modifiant les forces appliquées aux organes de traction et agissant sur la pièce (04) de raccordement, au total avec des forces (F₁, F₂) de traction résultant du premier tuyau (08) sous pression raccordé ou des deux tuyaux (08, 09) sous pression raccordés, lesdites forces, vers le guidage (12) de tuyau, sont inférieures aux forces de friction agissant dans tout le guidage (12, 13) de tuyau.

3. Installation (03) d'alimentation sous pression selon la revendication 1 ou 2,
**caractérisée en ce que**
le premier et/ou le deuxième tuyau (08, 09) sous pression peuvent/peut être reçus/reçu au moins partiellement dans un moyen de stockage (10, 11) de tuyau.

4. Installation (03) d'alimentation sous pression selon la revendication 3,
**caractérisée en ce que**
le moyen de stockage de tuyau est un tambour de tuyau ou un enrouleur (10, 11) de tuyau.

5. Installation (03) d'alimentation sous pression selon l'une quelconque des revendications précédentes 1 à 4,
**caractérisée en ce que**
le moyen de stockage (10, 11) de tuyau produit la force (F₁, F₂) de traction qui est transmise à la pièce (04) de raccordement à travers le tuyau (08, 09) sous pression agissant comme organe de traction, la force (F₁, F₂) de traction qui est transmise à l'organe de traction étant produite par une force de ressort.

6. Installation (03) d'alimentation sous pression selon l'une quelconque des revendications précédentes 1 à 5,
**caractérisée en ce que**
le guidage (12) de tuyau s'étend principalement horizontalement, le guidage (12) de tuyau présentant des sections (16) arqués pour un changement de direction.

7. Installation (03) d'alimentation sous pression selon l'une quelconque des revendications précédentes 1 à 6,
**caractérisée en ce que**
le tuyau (08, 09) sous pression raccordé à la pièce (04) de raccordement est guidé moyennant le guidage (12, 13) de tuyau pour l'essentiel sur toute sa longueur.

8. Installation (03) d'alimentation sous pression selon l'une quelconque des revendications précédentes 1 à 7,
**caractérisée en ce que**
le guidage (12) de tuyau est assemblé de rails (14) profilés.

9. Installation (03) d'alimentation sous pression selon la revendication 8,
**caractérisée en ce que**
les tuyaux (08, 09) sous pression raccordés à la pièce (04) de raccordement, après l'autre guidage (13) de tuyau, sont guidés dans la coupe transversale intérieure (17) fournie par les rails (14) profilés pour l'essentiel sur toute leur longueur.

10. Installation (03) d'alimentation sous pression selon l'une quelconque des revendications précédentes 1 à 9,
**caractérisée en ce que**
la pièce (04) de raccordement est guidée à et/ou dans le rail (14) profilé pour l'essentiel sans jeu.

11. Installation (03) d'alimentation sous pression selon l'une quelconque des revendications précédentes 1 à 10,
**caractérisée en ce qu'**
un moteur d'entraînement est attaché à la pièce (04) de raccordement, le moteur d'entraînement pouvant déplacer la pièce de raccordement dans les deux sens.

12. Installation (03) d'alimentation sous pression selon l'une quelconque des revendications précédentes 1 à 11,
**caractérisée en ce que**
le tuyau (08, 09) sous pression est prévu pour transporter de l'air comprimé.

13. Installation (03) d'alimentation sous pression selon l'une quelconque des revendications précédentes 1 à 11,
**caractérisée en ce que**
le tuyau (08, 09) sous pression est prévu pour transporter de l'eau.

14. Installation (01) de peinture pour peindre des véhicules et des parties de véhicule, comportant une installation (03) d'alimentation sous pression selon la revendication 12.

15. Installation (01) de lavage pour nettoyer des véhicules, comportant une installation (03) d'alimentation sous pression selon la revendication 13.
